# EUROPEAN PATENT SPECIFICATION

(11) **EP 2 885 121 B1**
(45) Date of publication and mention of the grant of the patent: **28.11.2018**
(21) Application number: 13762283.3
(22) Date of filing: 08.08.2013
(51) Int. Cl.: B29C 63/00, B29C 63/02

(54) **DEVICE FOR APPLYING A PROTECTIVE FILM ONTO THE SURFACE OF AN ITEM, MORE PARTICULARLY ONTO THE DISPLAY OF AN ELECTRONIC DEVICE**
VORRICHTUNG ZUM AUFBRINGEN EINER SCHUTZFOLIE AUF DER OBERFLÄCHE EINES GEGENSTANDES, INSBESONDERE AUF EINEM BILDSCHIRM EINER ELEKTRONISCHEN VORRICHTUNG
DISPOSITIF POUR APPLIQUER UN FILM PROTECTEUR SUR LA SURFACE D'UN ARTICLE, PLUS PARTICULIÈREMENT SUR LE DISPOSITIF D'AFFICHAGE D'UN DISPOSITIF ÉLECTRONIQUE

(30) Priority: 14.08.2012 IT TO20120729
(43) Date of publication of application: 24.06.2015
(73) Proprietor: Vigano' Servizi S.r.l., 48015 Milano Marittima (RA) (IT)
(72) Inventor: PASINI, Philip, I-48015 Milano Marittima (RA) (IT)
(74) Representative: Robba, Pierpaolo
(86) International application number: PCT/IB2013/056485
(87) International publication number: WO 2014/027282

(56) References cited:
- EP-A1- 2 489 495
- WO-A2-02/00419
- US-A- 5 332 463
- US-A1- 2012 110 868
- DATABASE WPI Week 201275 Thomson Scientific, London, GB; AN 2012-N58227 XP002696267, & CN 102 627 003 A (BOE TECHNOLOGY GROUP CO LTD) 8 August 2012 (2012-08-08)

## Description

### Technical Field

The present invention relates to a device for applying a protective film onto the surface of an item.

More particularly, the present invention relates to a device for applying a protective film onto the display of an electronic device, such as a mobile phone, a tablet or the like.

### Prior Art

Nowadays, electronic devices such as mobile phones, namely touch screen mobile phones, tablet personal computers and the like are widely available.

It is evident that in such electronic devices the display, also in view of its small size, has to be maintained under conditions that ensure to the user a comfortable and effortless reading of the displayed data.

It is also evident that, on the other hand, said displays are subjected to scratches, abrasions, accumulation of dust and dirt, which deteriorate their performance in terms of readability of the displayed data.

For this reason, transparent films are often associated to the display of the above-mentioned electronic devices, which films protect said displays from scratches and dust and may also possibly have anti-glare properties so as to ensure a good readability of the displayed data in any lighting condition of the surrounding environment.

In general, such protective films are electrostatic adhesion films, i.e. they comprise an electrostatic layer that ensures the adhesion to the display without the use of glues or other product that could leave a residue.

The electronic devices are typically sold with such a protective film.

Moreover, since the film, after a certain period of use, deteriorates and needs to be replaced, protective films are also sold separately, whereby the user can replace the film whenever it is necessary.

However, the manual application of such protective films onto the display of an electronic device is not easy to perform.

Indeed, it is important to correctly position and align the protective film on the display at the first attempt, since the need to reposition several time the film on the display involves the risk of deteriorating the adhesion properties of said film, thus jeopardizing its firmness. By the way, the formation of wrinkles and/or air bubbles between the protective film and the underlying display significantly affects the final result, as said wrinkles and/or air bubbles successively represent an annoying obstacle when reading the data displayed on the display.

Moreover, the presence of wrinkles and/or air bubbles negatively affects the tightness of the protective film, drastically reducing its life, before replacement becomes required.

EP 2 489 495 discloses a device for applying a protective film on the surface of an electronic device including an insert that comprises a cavity intended to receive the electronic device: the electronic device is inserted in the receiving cavity with its display facing upwards and the protective film is applied by means of a roll.

It is evident that using a roll cannot ensure a proper and accurate application of the film and the final result is strongly dependent from the skill of the user.

US 2012/110868 discloses a device for applying a protective film on the display of an electronic device which comprises an alignment tray with one or more alignment lugs moulded into the alignment tray, so that the electronic device can be received in the alignment tray and held inside it; the protective film is mounted to an its own alignment tray that is manually handled by the user for aligning the film to the display of the electronic device.

It is evident that also in this case the final result is strongly dependent from the skill of the user.

WO 02/00419 discloses a device for adhesively bonding an adhesive coated, semi-rigid film to a substrate, namely a window, which device comprises a plurality of alignment tools that are positioned to substantially contact the surface of the substrate (i.e. the window) at an outer edge thereof. Such alignment tools are attached to the protruding frame of the window itself.

It is evident that such a device can only be used in connection with a substrate having a protruding perimeter frame, such as a window, on which the alignment tools can rest and to which the alignment tools can be attached, whereas it cannot be used for applying a film to the display of an electronic device, which is substantially flat.

US 5 332 463 discloses an alignment fixture for use in sealing integrated circuit packages formed by a package bas or chip carrier and a package lid.

Therefore, there is the need to provide a device which allows any user to correctly apply the protective film onto the display of an electronic device, irrespective of his/her manual dexterity.

An object of the present invention is therefore to provide a device and a method allowing to apply a protective film onto a surface in the correct position and with the correct alignment at the first attempt and without the formation of wrinkles or air bubbles. Another object of the present invention is to provide a device for applying a protective film onto a surface which is as simple and inexpensive as possible.

These and other objects are achieved by the device as claimed in the appended claims.

### Disclosure of the Invention

The device according to the invention essentially comprises a mount, comprising an outer perimeter frame, within which the shape of the item onto which the protective film is to be applied is defined, and one delimiting block protruding from said outer perimeter frame and holding the item within said frame and in contact with it.

Said mount also comprises a background wall acting as a supporting surface for the aforesaid item.

Thanks to the structure of the device according to the invention, the item onto which the protective film is to be applied is firmly and accurately maintained in position and the protective film can therefore be easily applied, in the correct position and with the correct alignment, at the first attempt and without the risk of forming wrinkles and/or air bubbles. Despite the extreme simplicity of the device according to the invention, practical tests have shown that by using said device the application of protective films, especially onto displays of electronic devices, is considerably improved, thus making this application easier, quicker and free from imperfections.

### Brief Description of the Drawings

Advantages and features of the invention will be more evident from the following detailed description of a preferred embodiment of the invention itself, given by way of non-limiting example, with reference to the accompanying drawings, wherein:
- Figure 1 is a front view of an exemplary device for applying a protective film which is not part of the present invention;
- Figure 2 is a side view of the device of Figure 1;
- Figure 3 is a front view of a further exemplary device for applying a protective film which is not part of the present invention;
- Figure 4 is a top view of the device of Figure 3;
- Figure 5 is a front view of a device for applying a protective film according to a preferred embodiment of the invention;
- Figure 6 is a front view of a device for applying a protective film according to a variant of the preferred embodiment of the invention of Figure 5.

### Description of a Preferred Embodiment of the Invention

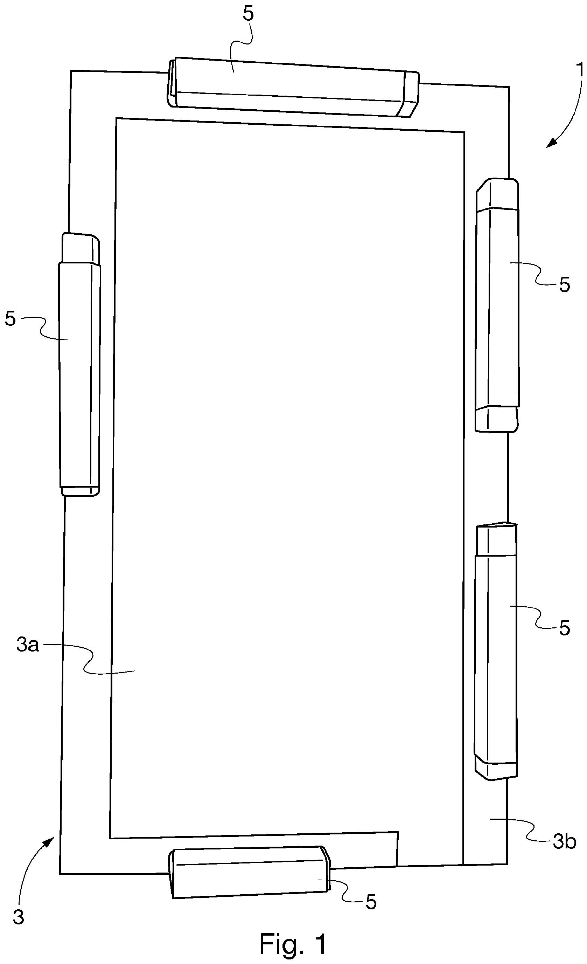

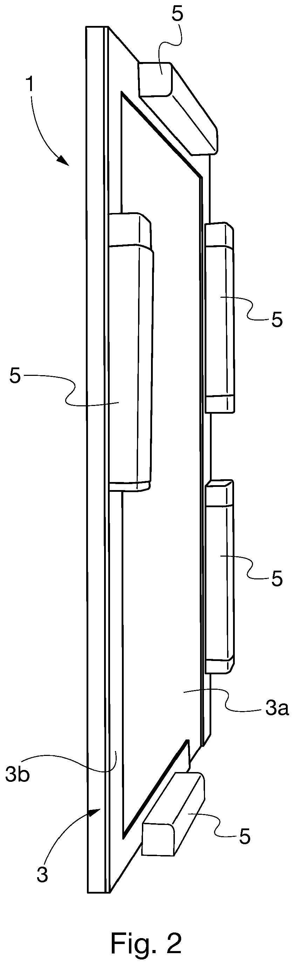

With reference to Figures 1 and 2, an exemplary device for applying protective films is shown, said device as a whole being indicated by reference 1.

The device 1 includes a mount 3 comprising an outer perimeter frame 3b, the shape and size of said frame 3b being chosen so that the shape of the item onto which the protective film is to be applied, such as for instance a mobile phone or a tablet personal computer, is defined within said frame.

More particularly, according to the example shown in Figures 1 and 2, the whole shape of said item is defined within said perimeter frame 3b.

Moreover, according to the example shown in Figures 1 and 2, the mount 3 further comprises a background wall 3a, extending within the perimeter frame 3b and acting as a supporting surface for the aforesaid item when the latter is placed inside said frame 3b. The device 1 further comprises one or more delimiting blocks 5 arranged along the perimeter of the frame 3b and protruding therefrom, said blocks allowing to hold the above-mentioned item within the frame 3b.

In the example shown in Figures 1 and 2, five delimiting blocks 5 are provided, which are discretely arranged along the perimeter of the frame 3b.

More particularly, in the example shown in Figures 1 and 2, the frame 3b has a rectangular outline and at least a delimiting block 5 having a rectilinear shape is provided on each side of said frame.

It is evident that delimiting blocks having different shapes and provided in different number could also be envisaged.

For example, delimiting blocks having corner-like shape could be provided at each corner of the frame 3b or even at two opposite corners of said frame only.

Still, a single delimiting block extending along the whole perimeter of the frame 3b, or along a portion of said perimeter sufficient for ensuring the proper retention of the item within the frame itself, could be provided.

According to the invention, the method for applying a protective film onto the surface of an item - namely onto the display of an electronic device - by using the above- disclosed device 1 will be evident:
- an electrostatic adhesion film is freed from the backing sheet associated therewith, if any, and placed into the frame 3b of the mount 3, where it is maintained in position by the delimiting blocks 5, with the electrostatic adhesion surface facing upwards;
- the aforesaid item, with the display facing downwards, is inserted into the device 2, within the frame 3b of the mount 3, where it is guided by the delimiting blocks 5, and it is pressed against the film housed in said device 1.

As clearly visible in Figures 1 and 2, this is made possible by the fact that, on the inner side with respect to the delimiting blocks 5, the frame 3b of the mount 3 has a free border that can be used as a housing or seat for the protective film.

As mentioned before, practical tests have proven that using the device allows to apply protective films without wrinkles and air bubbles and in an extremely quick and accurate way.

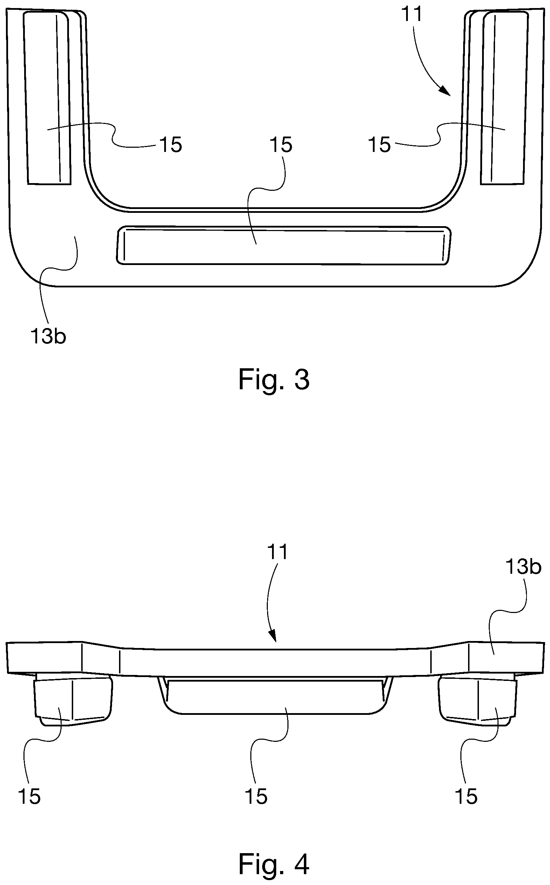

Turning now to Figures 3 and 4, a further exemplary device for applying protective films is shown, said device as a whole being indicated by reference 11.

Also in this case, the device 11 includes a mount 13 comprising an outer perimeter frame 13b; however, according to the example shown in Figures 3 and 4 the shape and size of said frame 13b are chosen so that only a portion of the shape of the item onto which the protective film is to be applied is defined within said frame.

More particularly, in the example shown in Figures 3 and 4, the frame 13b has a "U"-shaped outline and it is suitable for housing an end portion of an item, such as a mobile phone or a tablet personal computer.

Also in this case, the device 11 further comprises one or more delimiting blocks 15 arranged along the perimeter of the frame 13b and protruding therefrom, thus allowing to obtain a seat for the above-mentioned item within the frame 13b.

In the example shown in Figures 3 and 4, three delimiting blocks 15 are provided, which are discretely arranged along the perimeter of the frame 13b; more particularly, said delimiting blocks 5 have a rectilinear shape and each of them is arranged on a respective side of the "U"-shaped frame 13b.

As an alternative, two delimiting blocks having corner-like shape could be provided each at each corner of the frame 13b or even a single delimiting block extending along the whole perimeter of the frame 13b, or along a substantial portion thereof could be provided.

Also in this case, a method for applying a protective film onto the item 1 comprises the steps of placing an electrostatic adhesion film into the device 11, on the frame 13b of the mount 13 and within the delimiting blocks 15, with the electrostatic adhesion surface facing upwards, and of successively inserting the aforesaid item into the device 11, with the surface onto which the protective film is to be applied facing downwards.

As clearly visible in particular in Figure 3, also in this case a seat or housing for a corresponding portion of a protective film is defined on the frame 13b of the mount 13, on the inner side with respect to the delimiting blocks 15.

Practical tests have proven that also in this case using the device 11 allows to apply protective films in the correct position and with the correct alignment at the first attempt, without wrinkles and air bubbles and in an extremely quick and accurate way.

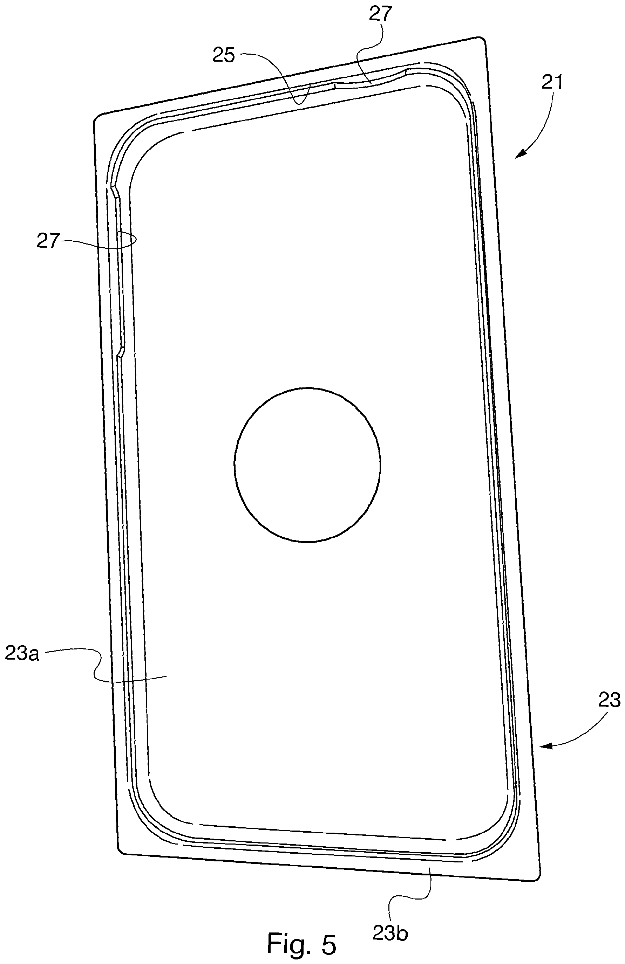

Turning now to Figure 5, a device 21 for applying protective films according to a preferred embodiment of the invention is shown.

Said device 21 is substantially similar to the device shown in Figures 1 and 2 and it includes a mount 23 comprising an outer perimeter frame 23b, the shape and size of said frame 23b being chosen so that the shape of the item onto which the protective film is to be applied is defined within said frame, and a background wall 23a extending within the perimeter frame 23b.

The device 21 differs from the device shown in Figures 1 and 2 in that it comprises a single delimiting block 25 extending along the whole perimeter of the frame 23b and substantially forming a second raised frame, suitable for ensuring the proper retention of the item within the frame itself.

Also in this case, the device 21 is shaped so that a seat or housing for a protective film, namely for an electrostatic adhesion protective film, can be defined on the frame 23b, on the inner side with respect to the delimiting block 25.

If the item comprises function keys along its perimeter (as often happens in the case, for instance, of mobile phones and tablets), correspondingly shaped recesses 27 can be provided in the frame formed by the delimiting block 25, so as to more firmly hold the item in the correct position.

It is to be noted that in this preferred embodiment, the device 21 for applying protective films is suitable for being integrated in the packaging of the item onto which the protective film is to be applied.

In other words, the item can be sold to the user inside the device 21, which has both the function of packaging during the shipping and storage of the item before the and the function of applying the protective film after sale.

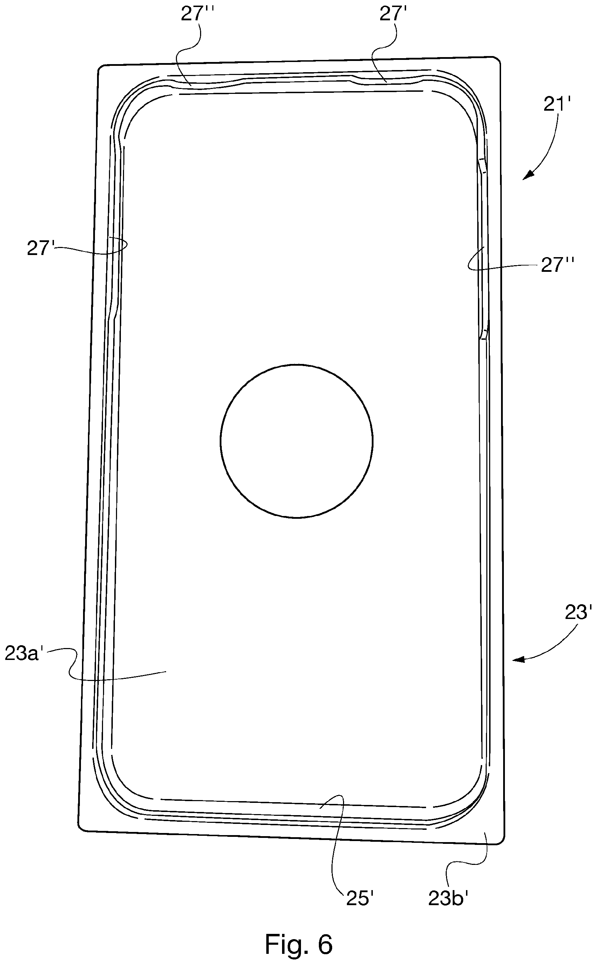

In Figure 6, a variant of the preferred embodiment of the invention shown in Figure 5 is illustrated.

Also in this variant, the device 21' includes a mount 23' comprising an outer perimeter frame 23b' and a background wall 23a'; it further comprises a single delimiting block 25' extending along the whole perimeter of the frame 23b' and substantially forming a second raised frame, provided with shaped recesses 27' arranged so as to house the function keys provided along the perimeter of the item onto which the protective film is to be applied.

In the variant of Figure 6, in order to allow application of a second protective film onto the rear side of the item in question, second shaped recesses 27" are provided in the delimiting block 25 in addition to the shaped recesses 27'; in this way, the item can be properly held inside the device 21' in either orientation.

From the above description it will be therefore evident that the invention achieves the objects set forth above.

It will also be evident that the embodiment described above and illustrated in the accompanying drawings has been given by way of non-limiting example and that several variants and modifications are conceivable without departing from the scope of protection as defined by the appended claims.

## Claims

1. Device (21;21') for applying a protective film onto the display of an electronic device, comprising:
- a mount (23;23') comprising an outer perimeter frame (23b;23b'), the shape of the electronic device onto which the protective film is to be applied or a portion thereof being defined within said outer perimeter frame, said frame (23;23') further comprises a background wall (23a;23a') extending within said outer perimeter frame (23b;23b');
- one or more delimiting blocks (25;25') arranged along the perimeter of said frame (23b;23b') and protruding therefrom, so that said electronic device can be held within said frame (23b;23b'), **characterized in that** a seat or housing for a film is defined within said frame (23b;23b'), on the inner side with respect to said one or more delimiting blocks (25;25'), said seat or housing for a film being defined by a free border of said frame (23b;23b'), **in that** the whole shape of said electronic device is defined within said frame (23b;23b') and **in that** said device comprises a single delimiting block (25;25') extending along the whole perimeter of said frame.

2. Use of the device (21;21') according to claim 1 for applying a protective film onto the display of an electronic device, such as a mobile phone, a tablet personal computer or the like.

3. Method for applying a protective film onto the display of an electronic device, comprising the following step:
- providing an electronic device having a display;
- providing a protective film having an adhesion surface;
characterized it further comprises the steps of:
- providing a device (21;21') according to claim 1;
- placing said protective film into said seat or housing defined by said frame (23b; 23b'), with its adhesion surface facing upwards;
- inserting said electronic device, with the display facing downwards, into said device (21;21'), within said frame (23b, 23b'), said delimiting block (25;25') guiding said electronic device;
- pressing said electronic device against said film.

## Patentansprüche

1. Vorrichtung (21; 21') zum Aufbringen einer Schutzfolie auf dem Bildschirm einer elektronischen Vorrichtung, mit:
- einer Halterung (23; 23'), die einen äußeren Umfangsrahmen (23b; 23b') aufweist, wobei die Form der elektronischen Vorrichtung, auf welche die Schutzfolie aufgebracht werden soll, oder ein Abschnitt derselben in dem äußeren Umfangsrahmen vorgegeben ist, wobei der Rahmen (23; 23') zudem eine Rückwand (23a; 23a') aufweist, die sich in dem äußeren Umfangsrahmen (23b; 23b') erstreckt;
- einen oder mehrere Begrenzungsblöcke (25; 25'), die entlang des Umfangs des Rahmens (23b; 23b') angeordnet sind und von diesem abstehen sodass die elektronische Vorrichtung in dem Rahmen (23b; 23b') gehalten werden kann, **dadurch gekennzeichnet**, das ein Sitz oder Gehäuse für eine Folie in dem Rahmen (23b; 23b') auf der Innenseite in Bezug auf einen oder mehrere Begrenzungsblöcke (25; 25') vorgegeben ist, wobei der Sitz oder das Gehäuse für eine Folie durch eine freie Grenze des Rahmens (23b; 23b') dadurch vorgegeben ist, dass die gesamte Form der elektronischen Vorrichtung in den Rahmen (23b; 23b') vorgegeben ist und dass die Vorrichtung einen einzelnen Begrenzungsblock (25; 25') aufweist, der sich entlang des gesamten Umfangs des Rahmens erstreckt.

2. Verwendung der Vorrichtung (21, 21') nach Anspruch 1 zum Aufbringen einer Schutzfolie auf den Bildschirm einer elektronischen Vorrichtung, etwa eines Mobiltelefons, eines Tablet-Computers oder ähnlichem.

3. Verfahren zum Aufbringen einer Schutzfolie auf den Bildschirm einer elektronischen Vorrichtung, mit den folgenden Schritten:
- Bereitstellen einer elektronischen Vorrichtung, die einen Bildschirm aufweist;
- Bereitstellen einer Schutzfolie, die eine klebende Oberfläche hat,
- **dadurch gekennzeichnet, dass** das Verfahren zusätzlich die folgenden Schritte aufweist:
- Bereitstellen einer Vorrichtung (21; 21') nach Anspruch 1,
- Anordnen der Schutzfolie in dem Sitz oder Gehäuse, das durch den Rahmen (23b; 23b') definiert ist, wobei seine klebende Oberfläche aufwärts zeigt,
- Einlegen der elektronischen Vorrichtung in die Vorrichtung (21; 21'), wobei der Begrenzungsblock (25; 25') in dem Rahmen (23b; 23b') die elektronische Vorrichtung führt,
- Andrücken der elektronischen Vorrichtung an den Film.

## Revendications

1. Dispositif (21; 21') pour appliquer un film protecteur sur l'afficheur d'un dispositif électronique, comprenant :
- une monture (23 ; 23') comprenant un cadre de périmètre extérieur (23b ; 23b'), la forme du dispositif électronique sur lequel le film protecteur doit être appliqué ou d'une portion de celui-ci étant définie au sein dudit cadre de périmètre extérieur, ledit cadre (23 ; 23') comprend en outre une paroi de fond (23a ; 23a') s'étendant au sein dudit cadre de périmètre extérieur (23b ; 23b') ;
- un ou plusieurs blocs de délimitation (25 ; 25') agencés le long du périmètre dudit cadre (23b ; 23b') et faisant saillie depuis celui-ci, de sorte que ledit dispositif électronique puisse être tenu au sein dudit cadre (23b ; 23b'), **caractérisé en ce qu'**une assise ou logement pour un film est défini(e) au sein dudit cadre (23b; 23b'), sur le côté intérieur par rapport auxdits un ou plusieurs blocs de délimitation (25 ; 25'), ladite assise ou ledit logement pour un film étant défini(e) par une bordure libre dudit cadre (23b ; 23b'), **en ce que** la forme entière dudit dispositif électronique est définie au sein dudit cadre (23b ; 23b') et **en ce que** ledit dispositif comprend un seul bloc de délimitation (25 ; 25') s'étendant le long du périmètre entier dudit cadre.

2. Utilisation du dispositif (21; 21') selon la revendication 1 pour appliquer un film protecteur sur l'afficheur d'un dispositif électronique, tel qu'un téléphone mobile, une tablette informatique ou similaire.

3. Procédé pour appliquer un film protecteur sur l'afficheur d'un dispositif électronique, comprenant les étapes suivantes :
- fourniture d'un dispositif électronique ayant un afficheur ;
- fourniture d'un film protecteur ayant une surface d'adhérence ;
**caractérisé en ce qu'**il comprend en outre les étapes de :
- fourniture d'un dispositif (21 ; 21') selon la revendication 1 ;
- mise en place dudit film protecteur dans ladite assise ou ledit logement défini(e) par ledit cadre (23b ; 23b'), avec sa surface d'adhérence en regard vers le haut ;
- insertion dudit dispositif électronique, avec l'afficheur en regard vers le bas, dans ledit dispositif (21 ; 21'), au sein dudit cadre (23b ; 23b'), ledit bloc de délimitation (25 ; 25') guidant ledit dispositif électronique ;
- appui dudit dispositif électronique contre ledit film.
